# EUROPEAN PATENT APPLICATION

(11) **EP 4 796 922 A1**
(43) Date of publication of application: **26.08.2026**
(21) Application number: 26158237.3
(22) Date of filing: 12.02.2026
(51) Int. Cl.: G01N 29/04, G01N 29/06, G01N 29/07

(54) **INSPECTION SYSTEM**

(30) Priority: 18.02.2025 JP 2025024256
(71) Applicant: HOSIDEN CORPORATION, Yao-shi, Osaka 581-0071 (JP)
(72) Inventor: SATO, Eiji, Osaka, 581-0071 (JP); NIHO, Hiroki, Osaka, 581-0071 (JP)
(74) Representative: MERH-IP Matias Erny Reichl Hoffmann Patentanwälte PartG mbB

(57) **Abstract**

An inspection system includes a first device and a second device, and the first device includes an output unit, a sensor unit, and a first communication unit. The output unit generates vibrations on a surface of a solid as an inspection target or in the solid. When sensing the vibrations propagating through the solid, the sensor unit detects first information. The first information includes state information, which is information for analyzing a state of the solid, and first position information, which is information for identifying a relative position relation between a detection-target location in the solid corresponding to the state information at a first time, which is a time of sensing the vibrations, and the first device. The first communication unit transmits a first signal including the first information to the second device. When receiving the first signal, the second device detects second information including second position information, which is information regarding a position of the first device at the first time.

## Description

### TECHNICAL FIELD

The present disclosure relates to an inspection system for inspecting a solid.

### BACKGROUND ART

Conventionally, a structure evaluation system for evaluating the inside of a structure by using acoustic waves has been known. The structure evaluation system described in International Publication No. WO2018/235195 (hereinafter referred to as "Patent Literature 1") includes an impact applying unit for applying an impact on a structure, a sensor for detecting an acoustic wave, and a structure evaluation device for evaluating a degree of deterioration of the structure based on the detected acoustic wave. The structure evaluation device includes a position locating unit, an evaluating unit, and a display unit. The position locating unit previously retains information regarding a setting position of the sensor in the structure in association with a sensor ID. The position locating unit performs position locating of an acoustic wave generation source based on the detection result of the acoustic wave and information about the sensor position retained in advance.

In the structure evaluation system described in Patent Literature 1, information regarding a position where an impact is to be applied has to be retained in association with the sensor ID or information regarding a position applied with an impact has to be retained in association with the detection result of the acoustic wave every time an impact is applied.

### SUMMARY OF THE INVENTION

Thus, an object of the present disclosure is to provide an inspection system not required to retain information regarding an inspection position.

According to a first technical feature of the inspection system of the present disclosure, the inspection system includes a first device and a second device, and the first device includes an output unit, a sensor unit, and a first communication unit.

The output unit generates vibrations on a surface of a solid as an inspection target or in the solid. When sensing the vibrations propagating through the solid, the sensor unit detects first information. The first information includes state information, which is information for analyzing a state of the solid, and first position information, which is information for identifying a relative position relation between a detection-target location in the solid corresponding to the state information at a first time, which is a time of sensing the vibrations, and the first device. The first communication unit transmits a first signal including the first information to the second device. When receiving the first signal, the second device detects second information including second position information, which is information regarding a position of the first device at the first time.

According to a second technical feature of the inspection system of the present disclosure, the second device includes a second communication unit. The second communication unit acquires third information including third position information, which is information for identifying an absolute position of the second device on the earth at the first time, and transmits a second signal including the first information, the second information, and the third information to a cloud system on the internet.

According to a third technical feature of the inspection system of the present disclosure, the inspection system further includes a third device. The second device includes a second communication unit. The third device includes a third communication unit. The second communication unit acquires third information including third position information, which is information for identifying an absolute position of the second device on the earth at the first time, and transmits a second signal including the first information, the second information, and the third information to the third device. The third communication unit transmits a third signal including the first information, the second information, and the third information to a cloud system on the internet.

According to a fourth technical feature of the inspection system of the present disclosure, the second position information is information for identifying a relative position relation between the first device and the second device at the first time.

According to a fifth technical feature of the inspection system of the present disclosure, the second information includes height information, which is information regarding a height of the first device from ground surface at the first time.

According to a sixth technical feature of the inspection system of the present disclosure, the first position information, the second position information, the third position information, the state information, and the height information are used to analyze and identify a state of the detection-target location.

According to a seventh technical feature of the inspection system of the present disclosure, at least any of the first communication unit, the second communication unit, and the third communication unit transmits a signal by a wireless scheme.

According to an eighth technical feature of the inspection system of the present disclosure, the relative position relation between the detection-target location and the first device at the first time, a relative position relation between the first device and the second device at the first time, and an absolute position of the second device on the earth at the first time are identified by the first device, the second device, or the third device, or on the cloud system.

According to a ninth technical feature of the inspection system of the present disclosure, the first device includes a first housing and a second housing. The first housing supports the sensor unit and the first communication unit. The second housing supports the output unit.

### EFFECTS OF THE INVENTION

According to the first technical feature of the inspection system of the present disclosure, it is not required to retain information regarding an inspection position.

According to the second technical feature of the inspection system of the present disclosure, each piece of acquired information can be managed on the cloud system.

According to the third technical feature of the inspection system of the present disclosure, even if a distance to a connection point to the internet is long, it is possible to connect to the internet system via a relay point and manage each piece of acquired information on the cloud system.

According to the fourth technical feature of the inspection system of the present disclosure, with the second position information, the relative position relation between the first device and the second device at the first time can be found.

According to the fifth technical feature of the inspection system of the present disclosure, it is possible to identify a height in centimeters (meters) at which the first device has detected the first information from the ground surface.

According to the sixth technical feature of the inspection system of the present disclosure, the state of the detection-target location can be analyzed in consideration of the absolute position of the detection-target location on the earth.

According to the seventh technical feature of the inspection system of the present disclosure, since at least any of the first device, the second device, and the third device is connected via a wireless scheme, convenience to users is enhanced.

According to the eighth technical feature of the inspection system of the present disclosure, it can be flexibly set whether to incorporate an arithmetic function and/or a storage function in each device and specifications based on the connection condition of the first device, the second device, the third device, and the cloud system.

According to the ninth technical feature of the inspection system of the present disclosure, with the output unit and the sensor unit arranged in separate housings, an inspection by using a transmitted wave transmitting through the detection-target location can be performed. With evaluation by using the transmitted wave and a reflected wave, accuracy of solid analysis is improved.

### BRIEF DESCRIPTION OF THE DRAWINGS

FIG. 1 is a schematic perspective view depicting hardware structure of a first device of a first embodiment.
FIG. 2 is a schematic perspective view depicting a first modification of the hardware structure of the first device of the first embodiment.
FIG. 3 is a schematic perspective view depicting a second modification of the hardware structure of the first device of the first embodiment.
FIG. 4 is a schematic perspective view depicting a third modification of the hardware structure of the first device of the first embodiment.
FIG. 5 is a block diagram depicting functional structure of an inspection system (without a third device) of the first embodiment.
FIG. 6 is a block diagram depicting functional structure of the inspection system (with the third device) of the first embodiment.
FIG. 7 is a sequence diagram depicting operation of the inspection system (without the third device) of the first embodiment.
FIG. 8 is a sequence diagram depicting operation of the inspection system (with the third device) of the first embodiment.
FIG. 9 is a block diagram depicting functional structure of an inspection system (without a third device) of a second embodiment.
FIG. 10 is a block diagram depicting functional structure of the inspection system (with the third device) of the second embodiment.
FIG. 11 is a block diagram depicting functional structure of an inspection system (without a third device) of a third embodiment.
FIG. 12 is a block diagram depicting functional structure of the inspection system (with the third device) of the third embodiment.
FIG. 13 is a block diagram depicting functional structure of an inspection system (without a third device) of a fourth embodiment.
FIG. 14 is a block diagram depicting functional structure of the inspection system (with the third device) of the fourth embodiment.
FIG. 15 is a block diagram depicting functional structure of an inspection system (without a third device) of a fifth embodiment.
FIG. 16 is a block diagram depicting functional structure of the inspection system (with the third device) of the fifth embodiment.
FIG. 17 is a block diagram depicting functional structure of an inspection system (without a third device) of a sixth embodiment.
FIG. 18 is a block diagram depicting functional structure of the inspection system (with the third device) of the sixth embodiment.
FIG. 19 is a diagram depicting an example of functional structure of a computer.

### DETAILED DESCRIPTION

In the following, embodiments of the inspection system of the present disclosure are described. Structural units having the same function are provided with the same reference character and redundant description is omitted. Note that each component depicted in the embodiments can be mutually combined unless a contradiction arises among the embodiments. Also note that the material, shape, dimension, number, arrangement, and so forth of the components in each mode of the embodiments described below are described merely by way of example and any design change can be made as long as similar functions can be achieved.

### [First Embodiment]

In the following, an inspection system of a first embodiment is described. The inspection system of the present embodiment includes a first device U1, a second device U2, and, in some cases, a third device U3.

### [Hardware Structure]

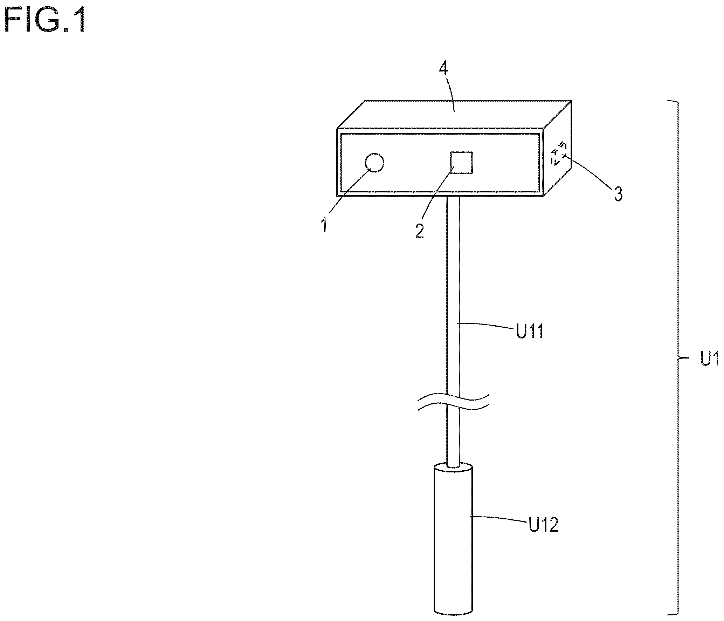

As depicted in FIG. 1, the first device U1 has an output unit 1, a sensor unit 2, a first communication unit 3, and a first housing 4.

### <<First Device U1>>

The number of first devices U1 may be one or more. As depicted in FIG. 1, the first device U1 may have a coupling unit U11 and a gripping unit U12. The coupling unit U11 extends in a rod shape with a line, a curve, or a line and a curve in combination, and may have one end portion coupled to the first housing 4 and the other end portion coupled to the gripping unit U12.

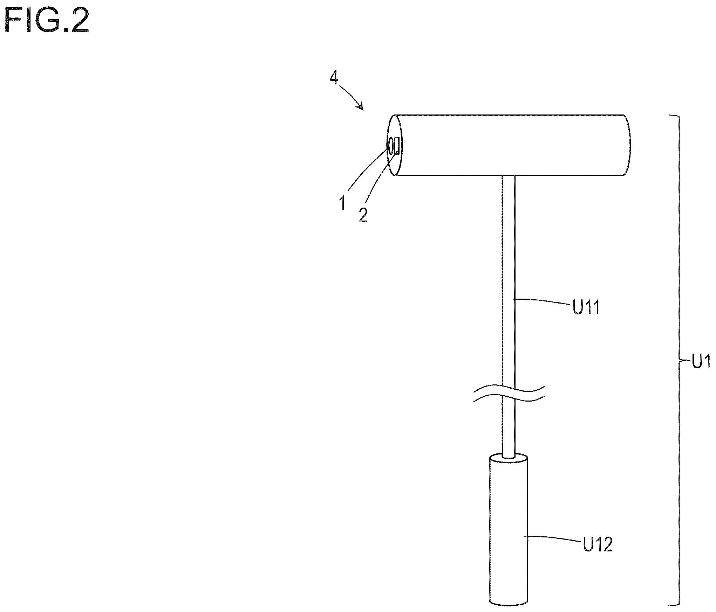

As depicted in FIG. 2, the first device U1 may be formed in a hammer shape, the output unit 1 and the sensor unit 2 may be supported by the first housing 4 as a head portion of the hammer, and the first device U1 may have the coupling unit U11 as a portion of a handle of the hammer and the gripping unit U12 as a grip portion of the hammer.

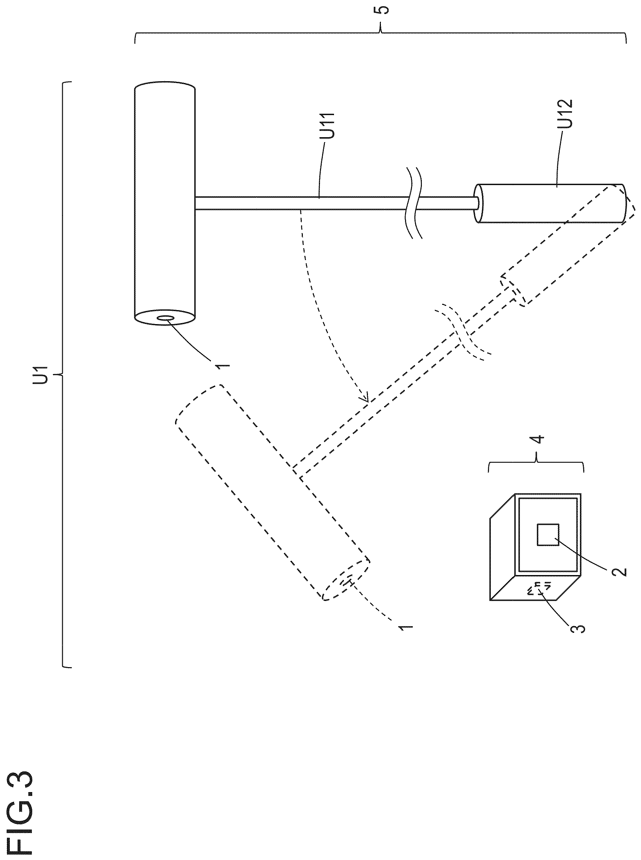

Also as depicted in FIG. 3, the first device U1 may have the first housing 4 and a second housing 5. The second housing 5 may be formed in a hammer shape, the output unit 1 may be supported by a head portion of the second housing 5, and the sensor unit 2 and the first communication unit 3 may be supported by the first housing 4. Here, the second housing 5 may have the coupling unit U11 as a portion of a handle of the hammer and the gripping unit U12 as a grip portion of the hammer.

### <<Output Unit 1>>

The output unit 1 may be supported by the first housing 4 as depicted in FIG. 1 and so forth, or may be supported as being at least partially accommodated in the second housing 5 as depicted in FIG. 3. The number of output units 1 may be one or more. The output unit 1 may generate vibrations in a solid by collision with the solid, or may generate vibrations in a solid by outputting sound waves or ultrasonic waves.

### <<Sensor Unit 2>>

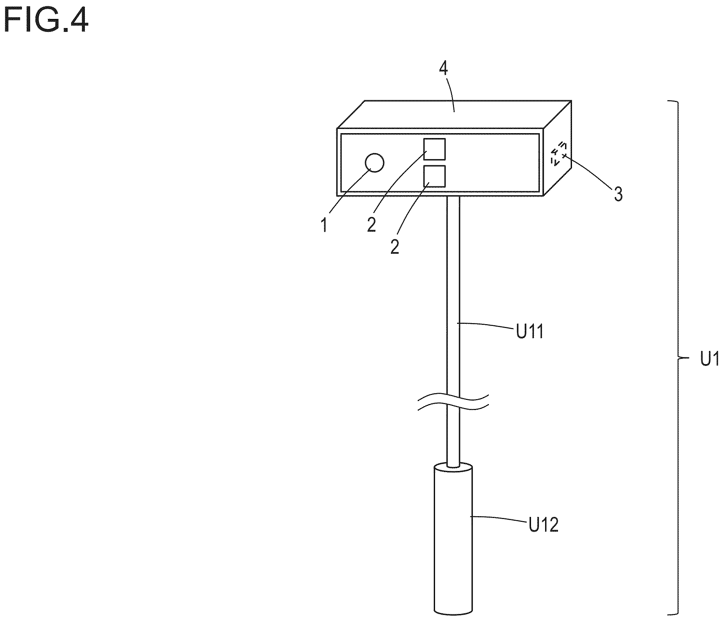

The sensor unit 2 may be at least partially accommodated in the first housing 4 as depicted in FIG. 1 and so forth, and the number of sensor units 2 may be one, or more as depicted in FIG. 4.

### <<First Communication Unit 3>>

The first communication unit 3 may be accommodated in the first housing 4 as depicted in FIG. 1 and so forth, and may be at least partially accommodated in the coupling unit U11 and the gripping unit U12. Also, the first communication unit 3 may transmit a signal by a wireless scheme, or may be compliant with short-distance wireless standards or long-distance wireless standards. Furthermore, the first communication unit 3 may have a transmission antenna for transmitting a signal and a reception antenna for receiving a signal, or may have a transmission/reception antenna for transmitting and receiving a signal.

Each antenna may be incorporated in an IC, may be implemented on a substrate separately from an IC, or may be a pattern antenna formed on a substrate.

### <<First Housing 4>>

The first housing 4 may be formed of an insulating material or a conductive material, or may be formed of an insulating material with its surface plated or coated with metal. The first housing 4 formed of an insulating material is advantageous in weight reduction, and the first housing 4 formed of a conductive metal material is advantageous in strength.

Also, the first housing 4 may have an accommodation unit or may be configured of a plurality of members. The accommodation unit may at least partially accommodate the sensor unit 2 and the first communication unit 3, or may at least partially accommodate the output unit 1.

### <<Second Device U2>>

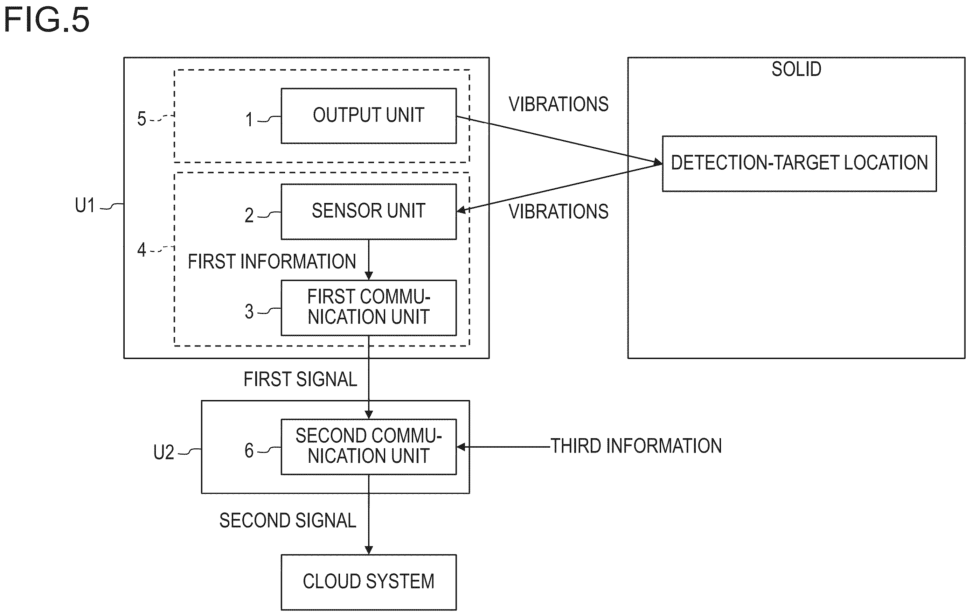

As with the first device U1, the number of second devices U2 may be one or more. Also as depicted in FIG. 5, the second device U2 includes a second communication unit 6, and is communicably connected to the first device U1 and a cloud system in a wireless or wired manner.

### <<Second Communication Unit 6>>

The second communication unit 6 may transmit a signal by a wireless scheme, or may be compliant with short-distance wireless standards or long-distance wireless standards. Also, the second communication unit 6 may have a transmission antenna for transmitting a signal and a reception antenna for receiving a signal, or may have a transmission/reception antenna for transmitting and receiving a signal.

Each antenna may be incorporated in an IC, may be implemented on a substrate separately from an IC, or may be a pattern antenna formed on a substrate.

### <<Third Device U3>>

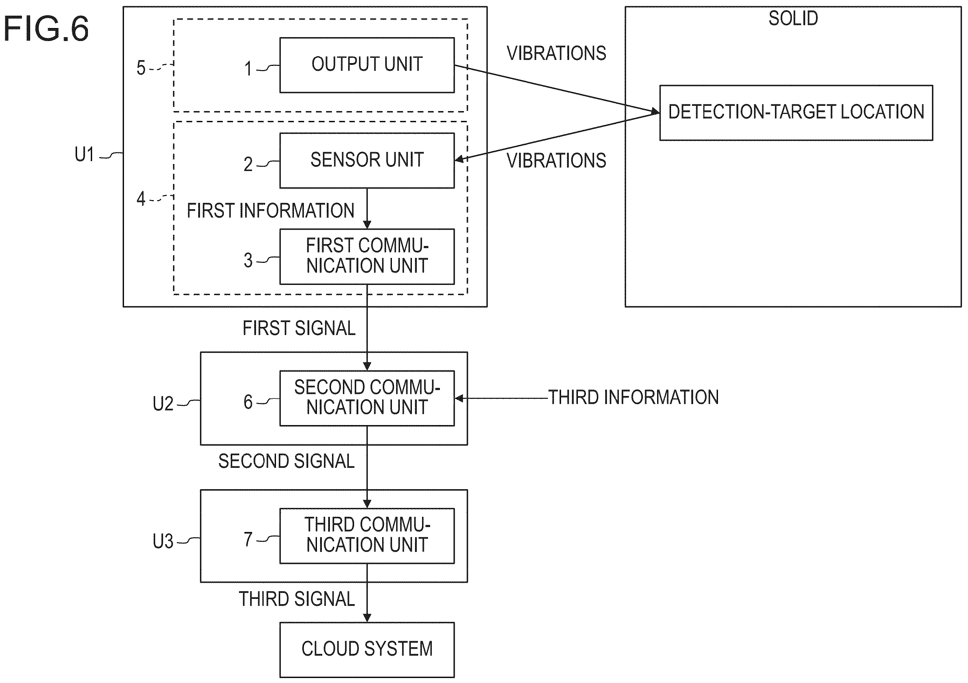

As depicted in FIG. 6, the inspection system may include the third device U3. As with the first device U1 and the second device U2, the number of third devices U3 may be one or more. Also as depicted in FIG. 6, the third device U3 includes a third communication unit 7, and is communicably connected to the second device U2 and a cloud system in a wireless or wired manner.

### <<Third Communication Unit 7>>

The third communication unit 7 may transmit a signal by a wireless scheme, or may be compliant with short-distance wireless standards or long-distance wireless standards. Also, the third communication unit 7 may have a transmission antenna for transmitting a signal and a reception antenna for receiving a signal, or may have a transmission/reception antenna for transmitting and receiving a signal.

Each antenna may be incorporated in an IC, may be implemented on a substrate separately from an IC, or may be a pattern antenna formed on a substrate.

### [Operation of Inspection System (When Third Device U3 Is Not Included)]

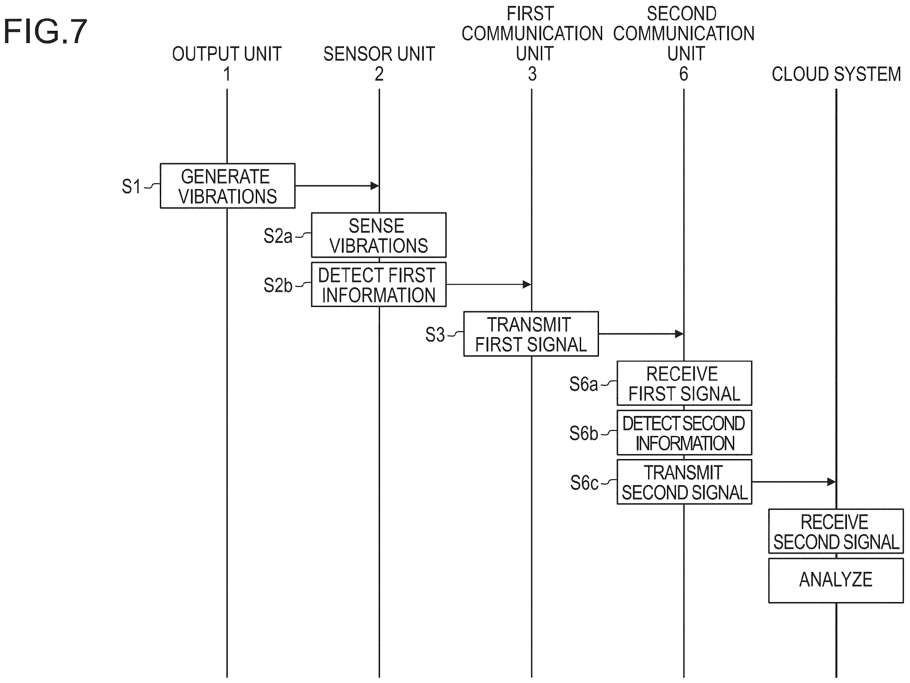

With reference to FIG. 7, the operation of each component of the inspection system (when the third device U3 is not included) of the present embodiment is described below.

First, the output unit 1 generates vibrations on a surface of a solid as an inspection target or in the solid (S1).

When sensing vibrations (vibrations may be reflected waves or transmitted waves) propagating through the solid (S2a), the sensor unit 2 detects first information, which is information regarding vibrations (S2b). The first information includes state information, which is information for analyzing the state of the solid, and first position information.

The first position information is information for identifying a relative position relation between a detection-target location in the solid corresponding to the state information at a first time and the first device U1. The first time is a time (a point in time) when the sensor unit 2 senses vibrations.

The first information may be detected by reflected waves of vibrations generated in the solid by the output unit 1 being reflected at the detection-target location, or may be detected by transmitted waves of vibrations generated in the solid by the output unit 1 transmitting through the detection-target location.

The first communication unit 3 transmits a first signal including the first information to the second device U2 installed away from the first device U1 (S3).

When receiving the first signal (S6a), the second communication unit 6 of the second device U2 detects second information including second position information, which is information regarding the position of the first device U1 at the first time (S6b). For example, the second position information is suitably information for identifying a relative position relation between the first device U1 and the second device U2 at the first time. The second information may include height information, which is information regarding the height of the first device U1 from the ground surface at the first time.

The second communication unit 6 acquires third information including third position information, which is information for identifying an absolute position of the second device U2 on the earth at the first time, and transmits (uploads) a second signal including the first information, the second information, and the third information to the cloud system on the internet (S6c).

The resolution of the second position information may be on a par with the third position information. Specifically, the second position information and the third position information suitably have a resolution of 10 cm or lower, and the resolution may be decreased by, for example, reinforcing directivity of the antenna of the first communication unit 3.

The cloud system receives the second signal to start an analysis.

### [Operation of Inspection System (When Third Device U3 Is Included)]

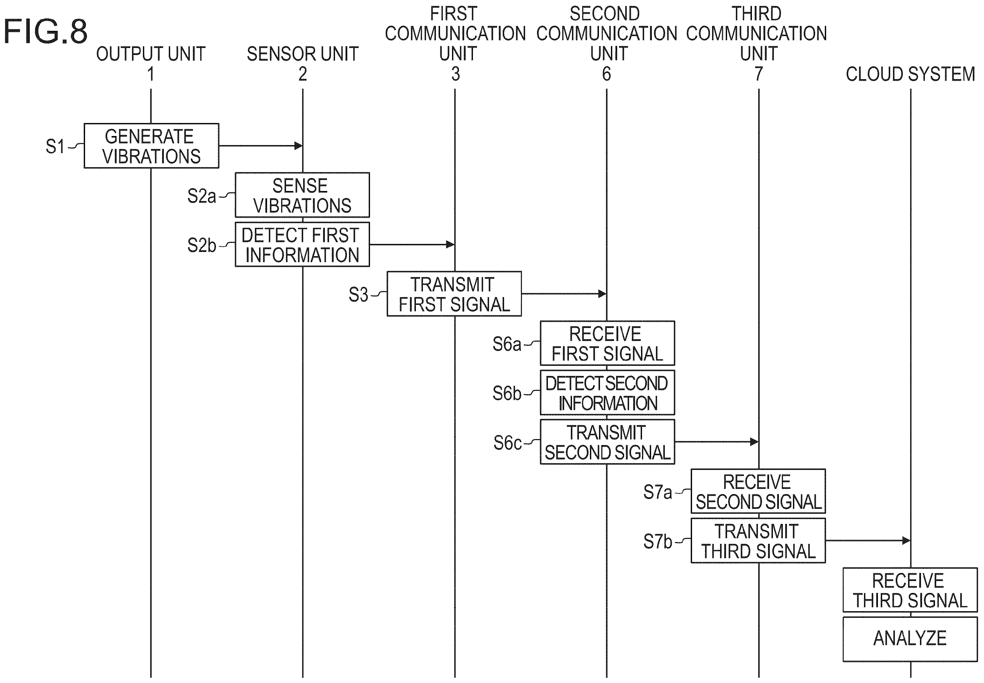

With reference to FIG. 8, the operation of each component of the inspection system (when the third device U3 is included) of the present embodiment is described below.

Steps S1, S2a, S2b, S3, S6a, and S6b are performed as described above. At step S6c, the transmission destination of the second signal is changed to the third device U3.

When receiving the second signal (S7a), the third communication unit 7 of the third device U3 transmits a third signal including the first information, the second information, and the third information to the cloud system on the internet (S7b). The cloud system receives the third signal to start an analysis.

### [Solid Analysis Method by Inspection System]

A solid analysis method by the inspection system of the present embodiment is described by using a specific example.

### <<Method of Identifying Relative Position Relation between Detection-Target Location and First Device U1 at First Time>>

From the first signal, by using a difference in phase between at least two pieces of first position information at the first time, a relative position relation between the detection-target location and the first device U1 is identified.

Specifically, vibrations generated in the solid by one output unit 1 are sensed by two sensor units 2, and first information is detected at each sensor unit 2.

Note that it is assumed that all of one output unit 1 and two sensor units 2 are not arranged on the same straight line. That is, it is assumed that one output unit 1 and two sensor units 2 are arranged so that they can be connected by at least two or more straight lines.

When the first position information included in each piece of first information is a time-domain signal taking time on its horizontal axis, a time with a fluctuation in a vertical-axis direction is extracted. By using a standard speed at which vibrations calculated in advance by measurement propagate through the solid, a distance between the detection-target location and each first device U1 including the sensor unit 2 is found by calculation.

When the first position information included in each piece of first information is a frequency-domain signal taking frequency on its horizontal axis, after inverse Fourier transformation is performed to transform the signal into a time-domain signal, a time with a fluctuation in a vertical-axis direction is extracted. By using a standard speed at which vibrations calculated in advance by measurement propagate through the solid, a distance between the detection-target location and each first device U1 including the sensor unit 2 is found.

Next, a distance between the first devices U1 each including the sensor unit 2 is found. By trilateration, a relative position relation between the detection-target location and each first device U1 can be identified.

The distance between the first devices U1 each including the sensor unit 2 may be measured by using a tape measure or optical measuring instrument; may be found by calculation by arranging one first device U1 among the two first devices U1, generating vibrations in the solid by the output unit 1 at a location where the other first device U1 is arranged, sensing the vibrations by the sensor unit 2 of the one first device U1 to detect the first information, and using the first position information included in the first information and a standard speed at which vibrations found in advance by measurement propagate through the solid; or may be calculated by using the relative position relation between each first device U1 and one second device U2.

Note that while two pieces of first position information detected by using one output unit 1 and two sensor units 2 are used in the above specific example, two pieces of first position information detected by using two output units 1 and one sensor unit 2 may be used, or a total number of output unit 1 and sensor unit 2 is suitably three or more but is not restrictive.

Also, two sensor units 2 may be supported by one first housing 4, or may be supported by two first housings 4 together with two first communication units 3, respectively.

### <<Method of Identifying Relative Position Relation between First Device U1 and Second Device U2 at First Time>>

By using a difference in phase between at least two pieces of second position information at the first time, a relative position relation between the first device U1 and the second device U2 is identified.

Specifically, second position information included in the second information detected by one second device U2 receiving the first signal transmitted from one first device U1 of the two first devices U1, second position information included in the second information detected by one second device U2 receiving the first signal transmitted from the other one first device U1 of the two first devices U1, and the distance and the position relation between the first devices U1 are found and, by trilateration, a relative position relation between each first device U1 and the second device U2 can be identified.

Note that it is assumed that all of two first devices U1 and one second device U2 are not arranged on the same straight line. That is, it is assumed that two first devices U1 and one second device U2 are arranged so that they can be connected by at least two or more straight lines.

Here, if the first communication unit 3 has a function of communicating the first signal via a wireless scheme, since the wireless speed for propagation in the air is substantially equal to the light speed, the distance between the first device U1 and the second device U2 can be easily calculated based on the propagation time. Also, if the wireless scheme is compliant with short-distance wireless standards, calculation errors by trilateration are decreased. Thus, the accuracy of the relative position relation between each first device U1 and the second device U2 to be identified is increased, and the resolution is decreased.

Furthermore, when the second information includes height information, it is possible to detect the height of each first device U1 from the ground surface. Thus, the height of the detection-target location from the ground surface can also be detected.

Note that while two pieces of second position information detected by one second device U2 receiving the first signals transmitted from the two first devices U1 are used in the above specific example, two pieces of second position information detected by two second devices U2 receiving the first signal transmitted by one first device U1 may be used, or a total number of first device U1 and second device U2 is suitably three or more but is not restrictive.

### <<Method of Identifying Absolute Position of Second Device U2 at First Time>>

To identify the absolute position on the earth, a global navigation satellite system (GNSS) as a satellite positioning system may be used. When the second device U2 is a portable device such as a personal computer or smartphone, a GNSS incorporated therein may be used. When the second device U2 is a vehicle for work or the like, a GNSS equipped in the vehicle may be used. Which type of GNSS is to be used is not restrictive. Also, to identify the absolute position on the earth, positioning based on base-station information may be used.

### <<Solid Evaluation Method>>

By using the identified relative position relation between the detection-target location and the first device U1, the identified relative position relation between the first device U1 and the second device U2, and the identified absolute position on the earth where the second device U2 is arranged, the absolute position of the detection-target location on the earth is identified, and the state information is associated, thereby evaluating the solid.

Specifically, when the first position information is a time-domain signal taking time on its horizontal axis, the length and the depth of an anomalous location such as a crack that is present in the solid is estimated based on a value on the vertical-axis direction and the wavelength of vibrations. For each detection-target location, the results of estimating the state such as the length and the depth of the anomalous location are accumulated and two-dimensionally or three-dimensionally mapped. With this, the state such as the absolute position of the anomalous location in the solid and its size can be evaluated.

As described above, the first position information, the second position information, the third position information, the state information, and the height information are used to identify the absolute position on the earth for each detection-target location and to analyze and identify the state of the detection-target location.

Note that the relative position relation between the detection-target location and the first device U1 at the first time, the relative position relation between the first device U1 and the second device U2 at the first time, and the absolute position of the second device U2 on the earth at the first time may be identified by the first device U1, the second device U2, or the third device U3, or on the cloud system.

### [Second Embodiment]

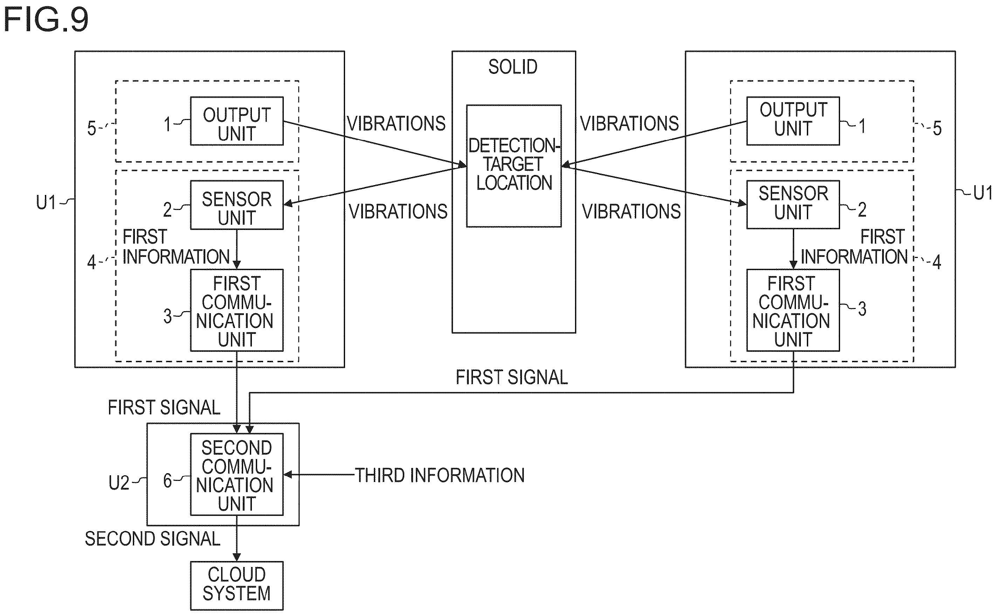

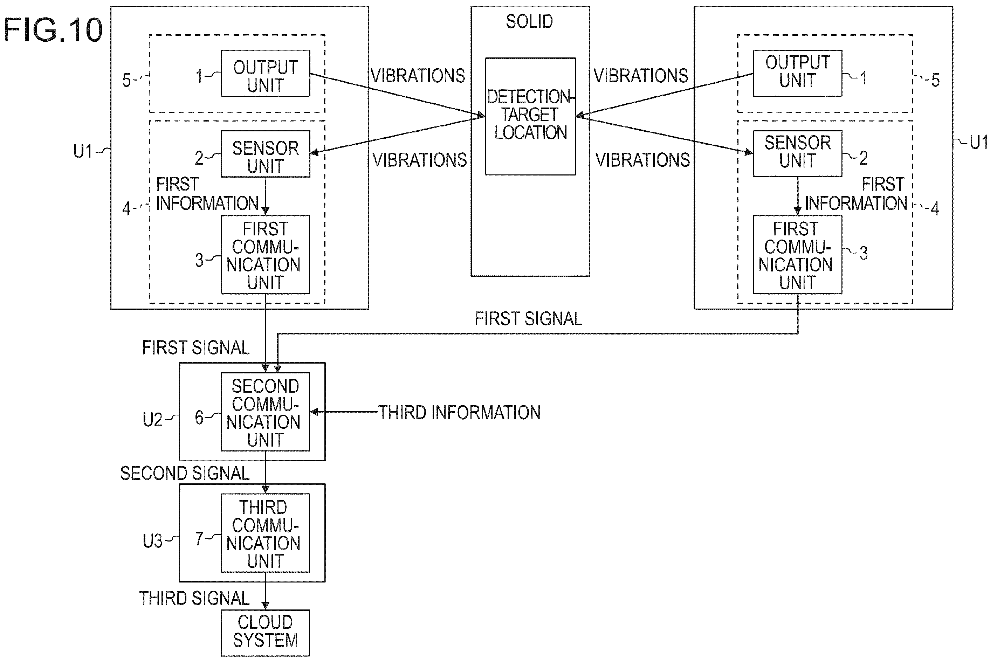

As depicted in FIG. 9 and FIG. 10, the inspection system may be configured to include two or more first devices U1. In this case, the two or more first devices U1 each perform step S3, and the second device U2 receives the first signal from each first device U1 to perform steps S6b and S6c. The cloud system receives the second signal to start an analysis. The same goes for the case in which the inspection system includes the third device U3, and steps S7a and S7b are further preformed. The cloud system receives the third signal to start an analysis.

### [Third Embodiment]

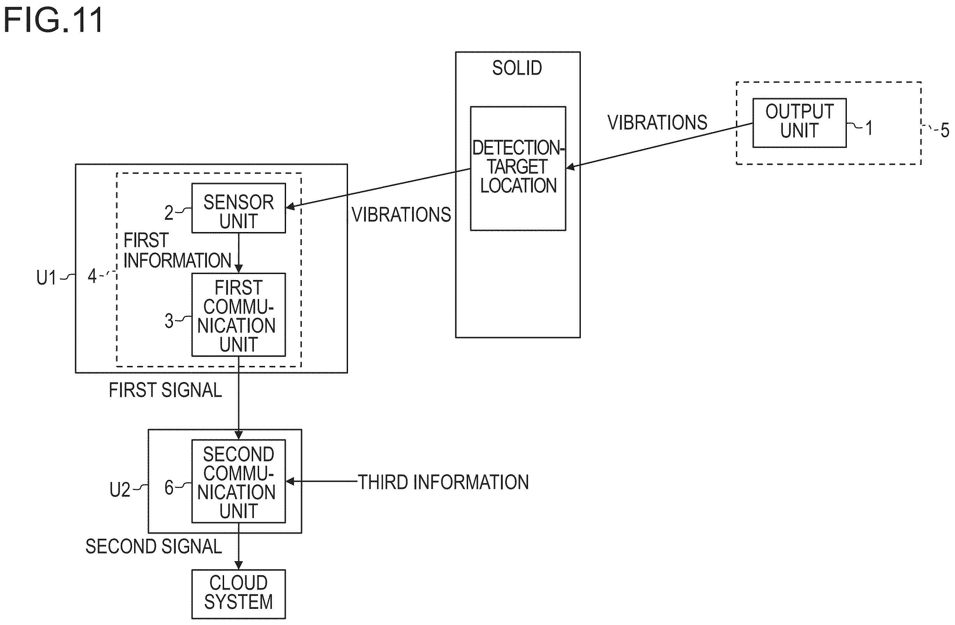

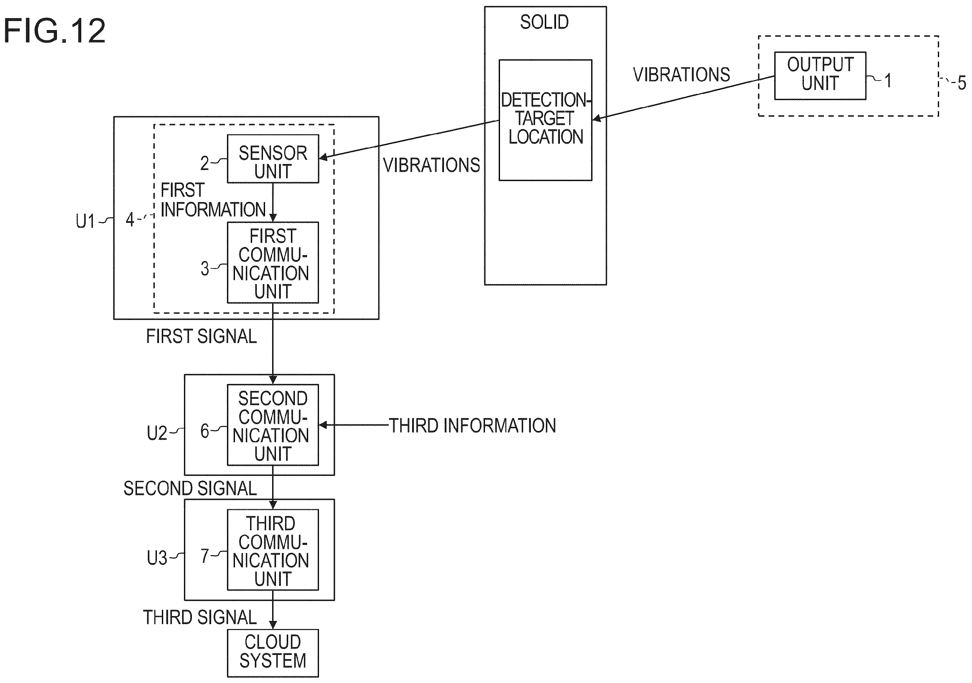

As depicted in FIG. 11 and FIG. 12, the sensor unit 2 and the first communication unit 3 may be supported by the first housing 4, and the output unit 1 may be supported by the second housing 5 separately from the first housing 4. The operation of each component is the same as that of the first embodiment.

### [Fourth Embodiment]

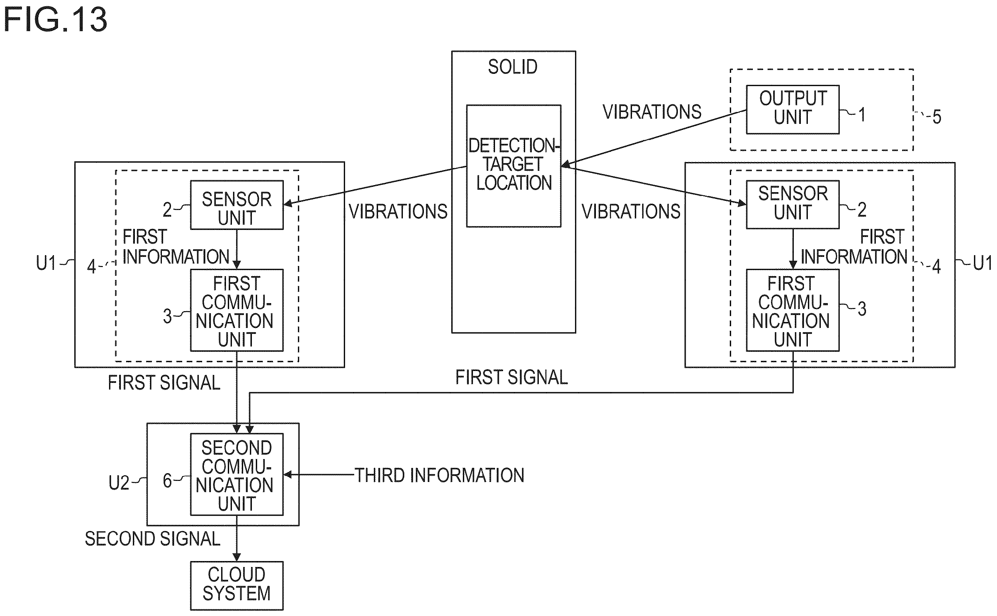

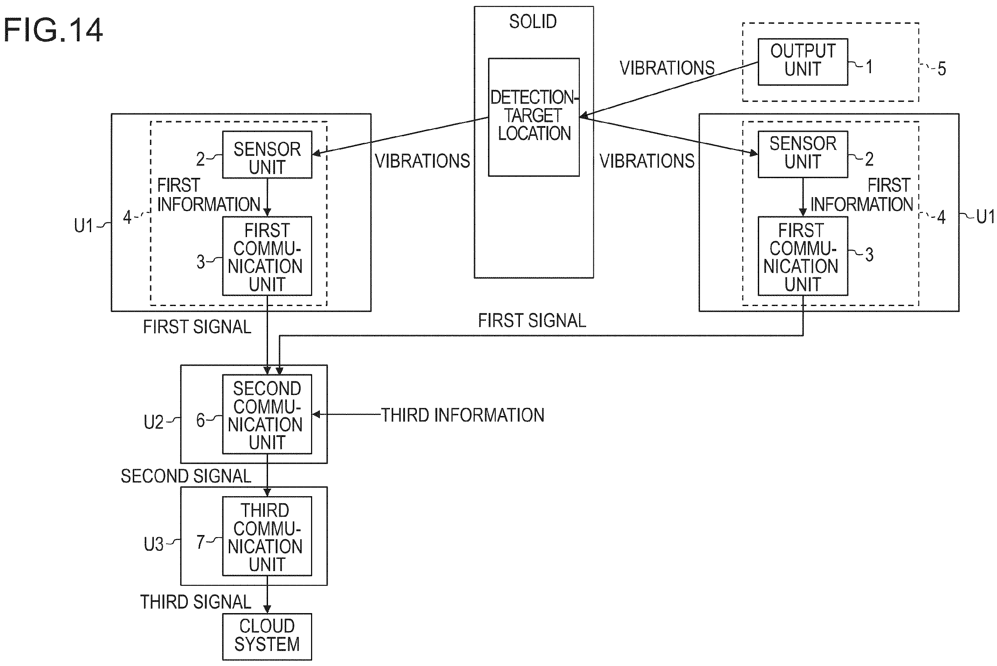

As depicted in FIG. 13 and FIG. 14, the inspection system may be configured to include two or more first devices U1 including only the first housing 4 (including the sensor unit 2 and the first communication unit 3) and one or more second housings 5 (including the output unit 1) separately from each first device U1. The operation of each component is the same as that of the second embodiment.

### [Fifth Embodiment]

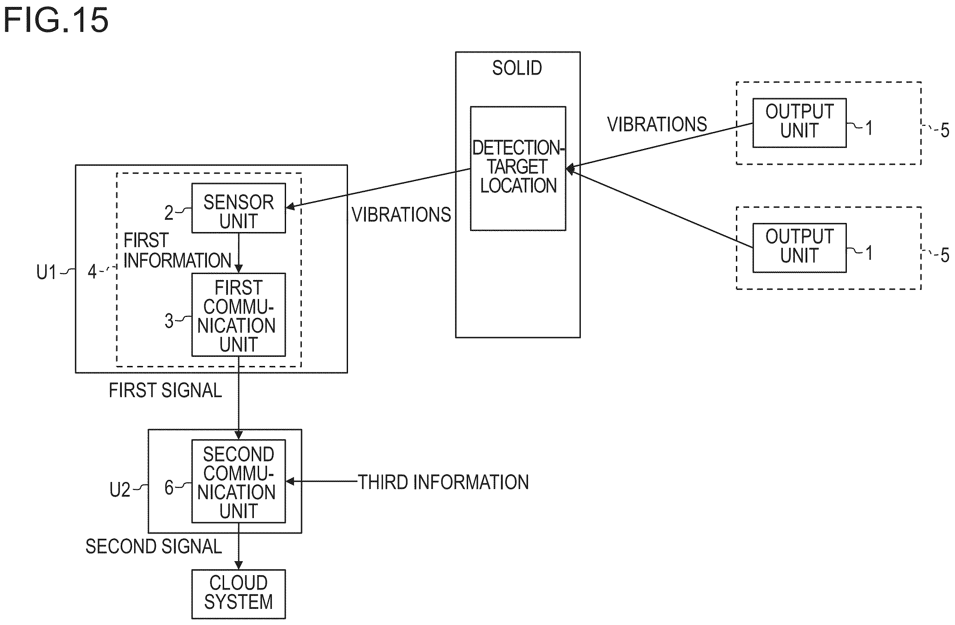

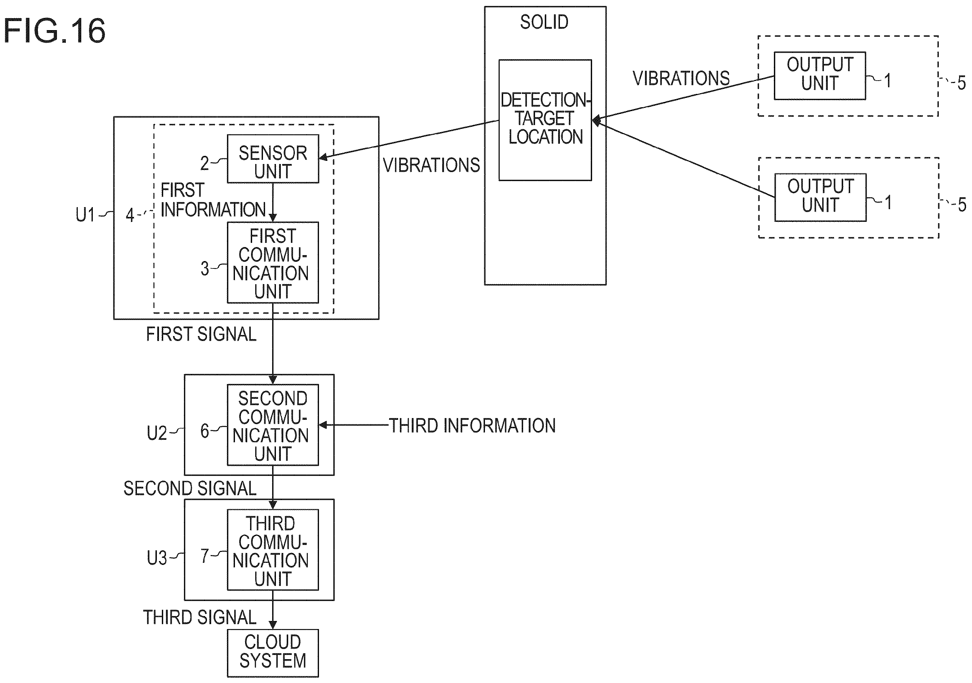

As depicted in FIG. 15 and FIG. 16, the inspection system may be configured to include one or more first devices U1 including only the first housing 4 (including the sensor unit 2 and the first communication unit 3) and two or more second housings 5 (each including the output unit 1) separately from each first device U1. The operation of each component is the same as that of the first embodiment.

### [Sixth Embodiment]

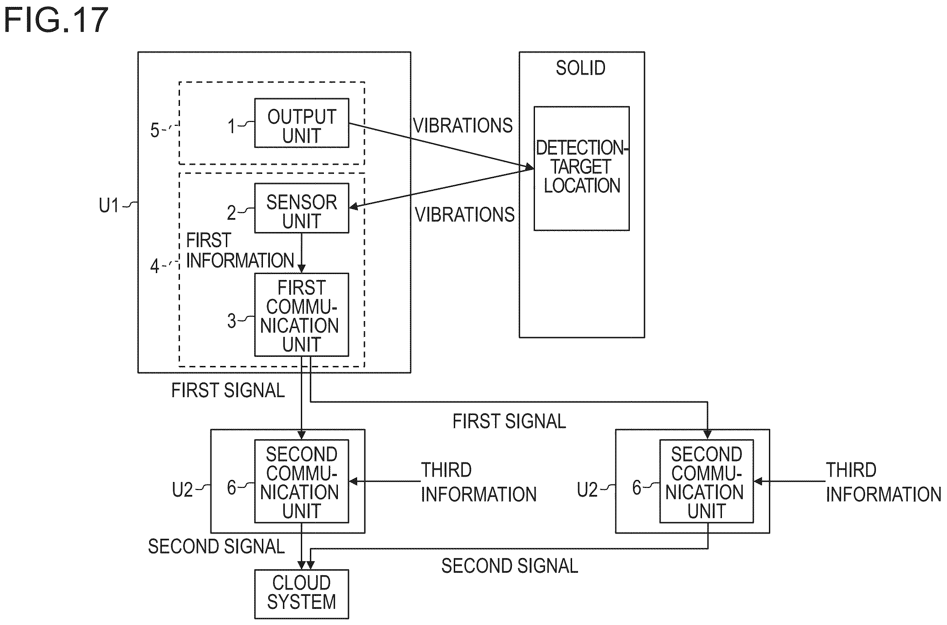

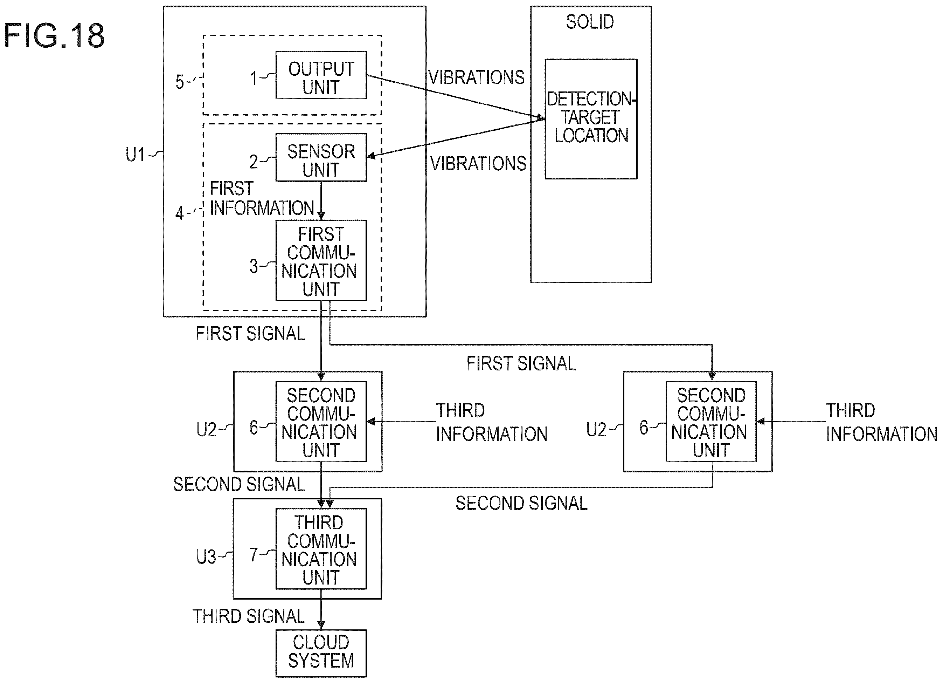

As depicted in FIG. 17 and FIG. 18, the inspection system may be configured to include two or more second devices U2. In this case, step S3 is performed on each second device U2. At step S6b, the second position information regarding the position of the first device U1 is detected with reference to the position of each second device U2. The cloud system receives the second signal from each second device U2.

The same goes for the case in which the inspection system includes the third device U3. The third device U3 receives the second signal from each second device U2 (S7a).

### [Technical Features and Effects]

The first device U1 and the inspection system configured as described above exert the following technical features and effects.

### (1) First technical features and effects

Every time vibrations are generated in the solid by the output unit 1 and the vibrations are sensed by the sensor unit 2, the relative position relation between the detection-target location and the first device U1 and the information regarding the position of the first device U1 can be automatically acquired from the first position information and the second position information. Thus, it is not required to retain information regarding the inspection position for every inspection (for example, it is not required to take a picture to identify the location and write down the inspected location on a map or drawing).

### (2) Second technical features and effects

Since each piece of acquired information can be managed on the cloud system, it is not required to allocate a storage area or arithmetic operation area, and a personal computer, a server, or a portable terminal can be each used as a device for managing its information. Thus, the first device U1 and the second device U2 can be simplified. For example, if the first device U1 can be simplified, cost can be reduced even if the first device U1 is arranged at each location to be inspected. Similarly, cost can be reduced even if a plurality of second devices U2 are arranged near a location to be inspected.

### (3) Third technical features and effects

Even if a distance to a connection point to the internet is long, it is possible to connect to the internet system via a relay point and manage each piece of acquired information on the cloud system. Also, even in a building or structure in a bad radio communication situation such as a plant, tunnel, or underground space, it is possible to connect to the internet system via the third device U3 installed at a location in a good radio communication situation with the second device U2 in the building or structure and manage each piece of acquired information on the cloud system.

### (4) Fourth technical features and effects

With the second position information, the relative position relation between the first device U1 and the second device U2 at the first time can be found.

### (5) Fifth technical features and effects

It is possible to identify the height in centimeters (meters) at which the first device U1 has detected the first information from the ground surface. Thus, by associating the relative position relation between the detection-target location and the first device U1 with the height of the first device U1 from the ground surface, the height of the detection-target location from the ground surface can be found.

### (6) Sixth technical features and effects

Since the state of the detection-target location can be analyzed in consideration of the absolute position of the detection-target location on the earth, if an anomalous portion such as a crack or loss is present on a surface of the solid or inside the solid, the size of the anomalous portion is determined, and maintenance can be performed as required. Also, when the solid is a structure in which a reinforcing material such as an iron-made rod material or wire is embedded inside a concrete, it is possible to find anomaly such as a crack or breakage occurring in the reinforcing material and perform maintenance as required. The maintenance as described above can prevent a collapse accident of the structure before it happens.

For example, when the surface or the inside of an infrastructural structure is inspected, if vibrations are generated in the solid by causing the output unit 1 to collide with the solid or by outputting sound waves or ultrasonic waves from the output unit 1, a picture of an inspected location is taken, and information regarding the position and the measurement results are linked together, picture-taking and linking take time and effort, and re-inspection due to a linking error or missed picture taking is required in some cases. By using the inspection system of the present disclosure, it is possible to save time and effort and prevent an error and re-inspection.

### (7) Seventh technical features and effects

For the first device U1, it is possible to remotely arrange the second device U2 or the third device U3 and omit or simplify routing for wired connection and connecting work, thereby enhancing convenience to users.

Also, the first communication unit 3, the second communication unit 6, and the third communication unit 7 can be compliant with short-distance wireless standards or long-distance wireless standards.

For example, when the first communication unit 3 is compliant with Bluetooth (registered trademark) low energy (BLE) standards, the second communication unit 6 is compliant with a low power wide area (LPWA) network such as LoRa standards, and the third communication unit 7 is compliant with 5G standards, the first signal based on the first information detected by the first device U1 as a BLE beacon and the second information can be subjected to BLE communication to the second device U2 as a BLE receiver arranged within 10 m from each first device U1; the second signal based on the first information and the second information detected from the first signal received at the second device U2 and the third information including the third position information detected by the second device U2 can be subjected to LoRa communication to the third device U3 arranged away from several km as a LoRa gateway; and the third signal based on the first information, the second information, and the third information detected from the second signal received by the third device U3 can be transmitted by 5G communication on the internet and managed by a cloud on the internet.

Note that, as described above, the second device U2 can be connected to the internet.

### (8) Eighth technical features and effects

It can be flexibly set whether to incorporate an arithmetic function and/or a storage function in each device and specifications based on the connection condition of the first device U1, the second device U2, the third device U3, and the cloud system.

Also, for example, the system is configured so that the relative position relation between the detection-target location and the first device U1 is identified by the first device U1 and the first signal is transmitted to the second device U2 only when the distance between the detection-target location and the first device U1 is within a predetermined threshold and the relative position relation between the detection-target location and the first device U1 is identified by the second device U2 and the second signal is transmitted to the third device U3 only when the distance between the detection-target location and the first device U1 is within a predetermined threshold. Thus, it is possible to reduce data to be uploaded on the cloud without degrading reliability of the analysis results to reduce loads of the analysis.

### (9) Ninth technical features and effects

With the output unit 1 and the sensor unit 2 arranged in separate housings, an inspection by using a transmitted wave transmitting through the detection-target location can be performed. With evaluation by using the transmitted wave and a reflected wave, accuracy of solid analysis is improved.

Furthermore, by changing the position of the sensor unit 2 without changing the position of the output unit 1 or changing the position of the output unit 1 without changing the position of the sensor unit 2, it is possible to decrease the number of output units 1 and sensor units 2. Still further, with the sensor unit 2 being fixed, it is possible to perform inspection by changing only the position of the output unit 1 so as to be able to cover the entire area of the solid. In this case, since the output unit 1 is configured very simply, changing the position is easy. For example, the position of the output unit 1 can be changed by a worker only gripping the first device U1 by one hand and moving.

### [Industrial Applicability]

The present disclosure can be used for a system that nondestructively inspects the states of the surface and inside of a solid such as a building, structure, or the like.

### <Appendix>

The functions realized by the components described in the present specification may be implemented in circuitry or processing circuitry, including general-purpose processors, application specific processors, integrated circuits, application specific integrated circuits (ASICs), central processing units (CPUs), conventional circuits, and/or combinations thereof, which are programmed to realize the described functions. Processors include transistors and other circuits and are considered to be circuitry or processing circuitry. A processor may be a programmed processor which executes a program stored in a memory.

In the present specification, a circuitry, unit, and means are hardware which are programmed to realize the described functions or execute the described functions. The hardware may be any hardware disclosed in the present specification or any hardware programmed to realize the described functions or known to execute the described functions.

If the hardware is a processor which is considered to be a circuitry type, the circuitry, means, or unit is a combination of the hardware and the software used to configure the hardware and/or the processor.

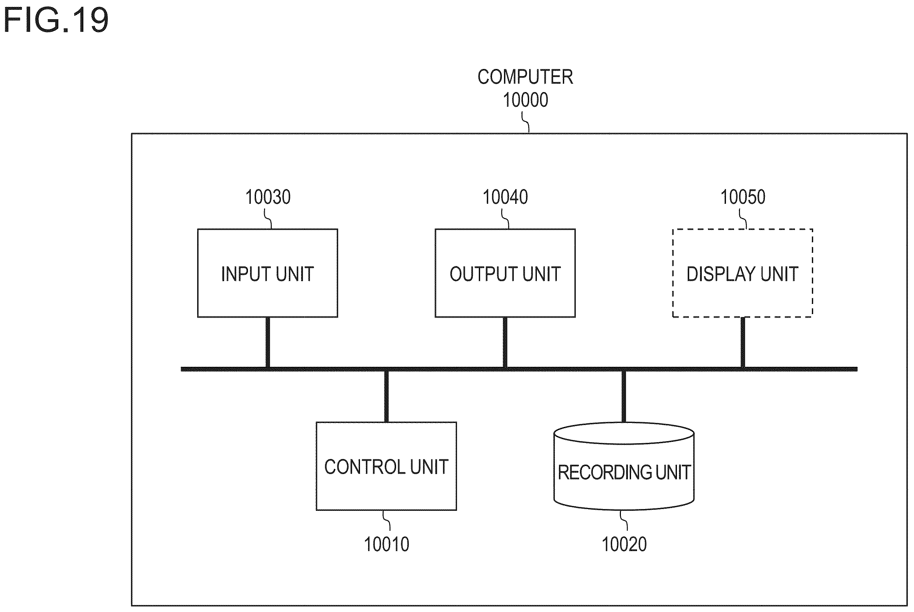

The above-described various types of processing can be performed by allowing a recording unit 10020 of a computer 10000 illustrated in FIG. 19 to read a program for execution of each step of the above-described method and allowing a control unit 10010, an input unit 10030, an output unit 10040, and the like to operate the program.

The program describing the processing details can be recorded on a computer-readable recording medium. The computer-readable recording medium may be any kind, such as a magnetic recording device, an optical disk, a magneto-optical recording medium, or a semiconductor memory.

Also, the distribution of this program is performed by, for example, selling, transferring, or lending a portable recording medium such as a DVD, a CD-ROM, or a USB memory on which the program is recorded. Furthermore, a configuration may be adopted in which this program is distributed by storing the program in a storage device of a server computer or a data center and transferring the program to other computers from the server computer or the data center via a network.

The computer that executes such a program first, for example, temporarily stores the program recorded on the portable recording medium or the program transferred from the server computer or the data center in a storage device thereof. At the time of execution of processing, the computer then reads the program stored in the storage device thereof and executes the processing in accordance with the read program. Also, as another form of execution of this program, the computer may read the program directly from the portable recording medium and execute the processing in accordance with the program and, furthermore, every time the program is transferred to the computer from the server computer or the data center, the computer may sequentially execute the processing in accordance with the received program. Also, a configuration may be adopted in which the transfer of a program to the computer from the server computer or the data center is not performed and the processing is executed by so-called application service provider (ASP)-type service by which the processing functions are implemented only by an instruction for execution thereof and result acquisition. Furthermore, a configuration may be adopted in which terminal processing is executed by using so-called software as a service (SaaS)-type service that causes a user to use part of a server computer or a data center together with a program. Note that a program in this form shall encompass information that is used in processing by an electronic computer and acts like a program (such as data that is not a direct command to a computer but has properties prescribing computer processing).

Further, although the present device was described as being configured via execution of a predetermined program on a computer in this form, at least some of these processing details may instead be embodied with hardware.

The foregoing description of the embodiments of the invention has been presented for the purpose of illustration and description. It is not intended to be exhaustive and to limit the invention to the precise form disclosed. Modifications or variations are possible in light of the above teaching. The embodiment was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. An inspection system comprising:
a first device; and
a second device, wherein
the first device includes
an output unit that generates vibrations on a surface of a solid as an inspection target or in the solid,
a sensor unit that detects, when sensing the vibrations propagating through the solid, first information including state information, which is information for analyzing a state of the solid, and first position information, which is information for identifying a relative position relation between a detection-target location in the solid corresponding to the state information at a first time, which is a time of sensing the vibrations, and the first device, and
a first communication unit that transmits a first signal including the first information to the second device, and
when receiving the first signal, the second device detects second information including second position information, which is information regarding a position of the first device at the first time.

2. The inspection system according to Claim 1, wherein
the second device includes a second communication unit that acquires third information including third position information, which is information for identifying an absolute position of the second device on the earth at the first time, and transmits a second signal including the first information, the second information, and the third information to a cloud system on the internet.

3. The inspection system according to Claim 1, further comprising:
a third device, wherein
the second device includes a second communication unit that acquires third information including third position information, which is information for identifying an absolute position of the second device on the earth at the first time, and transmits a second signal including the first information, the second information, and the third information to the third device, and
the third device includes a third communication unit that transmits a third signal including the first information, the second information, and the third information to a cloud system on the internet.

4. The inspection system according to Claim 1, wherein
the second position information is information for identifying a relative position relation between the first device and the second device at the first time.

5. The inspection system according to Claim 1, wherein
the second information includes height information, which is information regarding a height of the first device from ground surface at the first time.

6. The inspection system according to Claim 5, wherein
the first position information, the second position information, the third position information, the state information, and the height information are used to analyze and identify a state of the detection-target location.

7. The inspection system according to Claim 3, wherein
at least any of the first communication unit, the second communication unit, and the third communication unit transmits a signal by a wireless scheme.

8. The inspection system according to Claim 3, wherein
the relative position relation between the detection-target location and the first device at the first time, a relative position relation between the first device and the second device at the first time, and an absolute position of the second device on the earth at the first time are identified by the first device, the second device, or the third device, or on the cloud system.

9. The inspection system according to Claim 1, wherein
the first device includes
a first housing that supports the sensor unit and the first communication unit, and
a second housing that supports the output unit.
